# DEMANDE DE BREVET EUROPEEN

(11) **EP 1 069 414 A1**
(43) Date de publication de la demande: **17.01.2001**
(21) Numéro de dépôt: 00401981.6
(22) Date de dépôt: 10.07.2000
(51) Int. Cl.: G01H 11/08

(54) **Hydrophone à faible taux de distorsion**

(30) Priorité: 13.07.1999 FR 9909217
(71) Demandeur: INSTITUT FRANCAIS DU PETROLE, 92852 Rueil-Malmaison Cedex (FR)
(72) Inventeur: Baroni, Axelle, 92500 Rueil Malmaison (FR); Beauducel, Claude, 60119 Henonville (FR); Constantinou, Georges, 94210 La Varenne Saint Hilaire (FR)

(57) **Abrégé**

- Hydrophone à très faible distorsion comportant au moins une paire d'éléments sensibles (6, 8), de type piézo-électrique (par exemple et non limitativement), associés à au moins une des faces opposées flexibles d'un boîtier (1) formé par la réunion de coupelles (2, 3) à bords rigides.
- Les faces opposées d'un des disques (6) sont pourvues d'électrodes sur toute leur surface. Par contre, au moins une des électrodes (9a, 9b) associées aux faces opposées du deuxième disque (8), ne recouvre qu'une ou plusieurs portions (une bande annulaire par exemple) de chacune de ces faces, dans une zone extérieure de chaque coupelle (2, 3) plus soumise à des contraintes non linéaires. Les électrodes (7, 9) des deux disques sensibles (6, 8) sont interconnectées de façon à soustraire les signaux électriques engendrés par les deux disques en réponse aux pressions appliquées, avec l'effet vérifié expérimentalement que la distorsion résultant de cet agencement, due notamment à l'harmonique 2, est pratiquement supprimée.
- Applications notamment en géophysique, en détection ou repérage, etc.

## Description

La présente invention concerne un hydrophone à faible taux de distorsion, de type piézo-électrique par exemple.

### Etat de la technique

L'état de la technique dans le domaine des hydrophones piézo-électriques, est illustré notamment dans les brevets FR 1.556.971, 2.122.675 2.733.831 ou 2.748.183 ou les brevets US 3,970,878, 4,336,639 ou 4,926,397, 5,541,894, 5,815,466 ou 5,677,894, ou bien encore la demande de brevet FR 99/05.289.

Il est connu de former un hydrophone par assemblage d'éléments sensibles à des variations de pression, constitué chacun d'un disque réalisé en une céramique piézo-électrique associé à une paire d'électrodes disposées de part et d'autre. Chaque disque est collé sur un support flexible tel qu'un diaphragme, dont l'une des faces est exposée aux variations de pression à mesurer.

Le support flexible est par exemple un diaphragme supporté par un boîtier rigide ou bien encore la partie centrale flexible d'une coupelle dont la périphérie est renforcée et rigide, en appui sur une coupelle identique, elle-même porteuse d'un ou plusieurs éléments sensibles, les deux coupelles délimitant un boîtier. Les électrodes des deux éléments sensibles sont interconnectées électriquement de façon à assurer une compensation des effets parasites dus aux accélérations.

Lorsque la pression statique extérieure augmente, les deux plaques fléchissent jusqu'à venir en appui l'une contre l'autre. Leur écartement est choisi de façon que leur déformation maximale lorsqu'elles sont plaquées l'une contre l'autre, reste dans les limites de déformation élastique. De cette façon, le capteur est protégé contre les surpressions accidentelles. Le boîtier ainsi constitué peut être revêtu d'une couche protectrice d'un matériau transparent aux ondes acoustiques.

Les éléments sensibles peuvent être fixés extérieurement au boîtier et recouverts d'un revêtement protecteur (tel qu'une couche d'araldite enduite d'un vernis) de façon à maintenir une isolation électrique suffisante entre les électrodes. La sensibilité de ce type d'hydrophone est bonne et varie peu (moins de 10 % pour une pression statique de 10 MPa par exemple) avec la pression hydrostatique.

Suivant un autre agencement connu, les éléments sensibles sont fixés sur les faces intérieures des coupelles et donc à l'intérieur du boîtier, ce qui leur assure une bonne protection contre le milieu extérieur mais les exposent à des risques d'écrasement quand l'augmentation de la pression hydrostatique, en incurvant les plaques, vient les plaquer l'un contre l'autre. La sensibilité des hydrophones avec des éléments sensibles à l'intérieur du boîtier est plus faible et elle diminue fortement avec l'augmentation de la pression hydrostatique, phénomène que l'on peut attribuer à leur mode de fixation sur une face devenant convexe.

Un inconvénient commun des hydrophones à montage symétrique, avec une paire unique d'éléments sensibles tous les deux soit à l'intérieur du boîtier, soit à l'extérieur, reste la variation relativement importante de leur capacité électrique avec la pression hydrostatique. Elle augmente avec la pression quand les éléments sensibles sont à l'intérieur alors qu'elle diminue quand ils sont à l'extérieur.

Il est également connu de combiner les deux types précédents dans un hydrophone à deux diaphragmes délimitant un boîtier clos, chacun d'eux portant une paire d'éléments sensibles, l'un à l'extérieur du boîtier, l'autre à l'intérieur, les deux paires étant électriquement interconnectées en parallèle de façon à compenser certains des inconvénients inhérents aux deux modes d'agencement ci-dessus évoqués, mais cette solution est relativement coûteuse.

Par la demande de brevet FR 99/05.289 précédemment citée, on connaît un hydrophone comportant un boîtier clos délimité par deux coupelles avec partie centrale flexible et au moins deux éléments sensibles piézo-électriques de tailles différentes associés chacun à des électrodes et interconnectés électriquement, ces deux éléments sensibles étant fixés respectivement aux diaphragmes, l'un à l'extérieur du boîtier, l'autre à l'intérieur du boîtier. Un tel hydrophone avec une seule paire d'éléments sensibles, combine les avantages des hydrophones antérieurs. Sa capacité inter-électrodes est sensiblement constante dans une gamme de pression étendue et sa sensibilité est du même ordre de grandeur que celle obtenue avec un montage symétrique extérieur au boîtier.

Par le brevet US 5,677,894 déjà cité, on connaît aussi un hydrophone de type piézo-électrique comportant un boîtier allongé avec des diaphragmes flexibles opposés portant chacun extérieurement un cristal piézo-électrique en plusieurs parties séparées les unes des autres : une partie centrale et deux parties latérales disposées symétriquement et raccordées électriquement à la partie centrale. Un élément rigide (une tige) est intercalé entre les deux diaphragmes dans le but que l'application d'une pression rende convexes les parties centrales des cristaux sensibles et concaves leurs parties latérales. Les cristaux sont dimensionnés de façon que par combinaison des charges électriques dues à ces effets contraires, la distorsion soit réduite.

### L'hydrophone selon l'invention

Il comporte un boîtier comprenant au moins un diaphragme et au moins une paire d'éléments sensibles (de type piézo-électrique, à fibre optique etc.) au contact du boîtier, qui génèrent des signaux traduisant les contraintes générées d'au moins un diaphragme du boîtier, en réponse à des variations de pression dans le milieu extérieur.

Il est caractérisé en ce que le premier élément sensible de chaque paire est disposé au contact d'une première portion de diaphragme subissant essentiellement des déformations linéaires, et en ce que le deuxième élément sensible de chaque paire est disposé au contact d'au moins une deuxième portion de diaphragme subissant essentiellement des déformations moins linéaires, les aires respectives des dites première et deuxième portions étant choisies et les signaux produits par les deux éléments sensibles de chaque paire étant combinés, de façon à compenser sensiblement la distorsion affectant les signaux résultants produits en opération par l'hydrophone.

Le boîtier de l'hydrophone comporte par exemple au moins une coupelle avec une partie centrale flexible et une partie extérieure plus rigide, le premier élément sensible de chaque paire étant disposé de façon à générer des signaux traduisant les déformations essentiellement linéaires affectant une portion centrale flexible de diaphragme, et le deuxième élément sensible de chaque paire est disposé de façon à générer des signaux traduisant les déformations essentiellement moins linéaires affectant une portion extérieure plus rigide du dit diaphragme.

Dans le cas par exemple où les éléments sensibles de chaque paire sont de type piézo-électrique avec chacun deux faces opposées et des électrodes associées à ces faces opposées, au moins une première électrode du deuxième élément sensible de la paire, recouvre seulement une portion de la face de cet élément contre laquelle elle est appliquée (une portion extérieure par exemple), la deuxième électrode de ce même deuxième élément sensible recouvrant sensiblement toute la face contre laquelle elle est appliquée ou bien seulement une portion extérieure de chacune de ses faces.

Suivant un mode de réalisation, le boîtier comporte un diaphragme flexible, et les deux éléments sensibles de la même paire sont fixés respectivement aux faces opposées du diaphragme.

Suivant un autre mode de réalisation, le boîtier comporte deux diaphragmes flexibles, les deux éléments sensibles de la même paire étant fixés respectivement soit sur des faces correspondantes (toutes les deux extérieures ou toutes les deux intérieures), soit sur des faces différentes de ces deux diaphragmes flexibles.

Suivant un autre mode de réalisation, l'hydrophone comporte deux paires d'éléments sensibles fixés respectivement aux deux diaphragmes flexibles, les éléments sensibles correspondants des deux paires d'éléments sensibles étant au contact respectivement soit des faces identiques soit des faces opposées des deux diaphragmes.

Suivant un autre mode de réalisation, les deux éléments sensibles d'au moins une paire d'éléments sensibles sont de taille différentes, et dans le cas où ce sont des éléments sensibles de type piézo-électrique, au moins une des électrodes associée à l'élément sensible le plus grand recouvre seulement une portion extérieure de la face correspondante.

Les portions des faces recouvertes par des électrodes sur l'un et l'autre des éléments sensibles d'une même paire sont de préférence dimensionnées de façon à compenser la distorsion.

Suivant un autre mode de réalisation, le boîtier comporte au moins un diaphragme flexible circulaire, les éléments sensibles de chaque paire étant constitués de disques rendus sensibles l'un sur une portion centrale, l'autre, sur une partie périphérique.

Selon les cas, les éléments sensibles de chaque paire, sont soit directement interconnectés, soit connectées par l'intermédiaire d'un élément d'adaptation.

La fabrication de l'hydrophone défini ci-dessus, est simplifiée. Dans le cas par exemple où l'on utilise des éléments sensibles de type piézo-électrique, il n'est nul besoin de procéder à des découpes de cristaux pour former chaque élément sensible périphérique de compensation. Le cristal est entier mais seules les portions périphériques sélectivement métallisées des deux côtés contribuent à créer en opération des charges électriques participant à la compensation et la réduction recherchée de la distorsion. Lorsque les disques de chaque paire sont fixés aux faces opposées d'un même diaphragme flexible, ils le rigidifient. C'est utile pour limiter son incurvation vers l'intérieur du boîtier quand la pression hydrostatique extérieure augmente du fait d'une variation de la profondeur d'immersion.

On vérifie expérimentalement que la distorsion résiduelle affectant les signaux produits par cet agencement, notamment celle due à l'harmonique 2 des signaux, est très réduite et devient pratiquement nulle si l'on optimise les dimensions de (ou de chacune des deux) électrode(s) périphérique(s) de chaque premier élément sensible.

D'autres caractéristiques et avantages de l'hydrophone selon l'invention, apparaîtront à la lecture de la description ci-après d'exemples non limitatifs de réalisation, en se référant aux dessins annexés où :
- les Fig.1a, 1b montrent respectivement deux variantes d'un premier mode de réalisation de l'hydrophone avec une paire d'éléments sensibles fixés de part et d'autre d'un même diaphragme ;
- la Fig.2 montre une variante du mode de montage des Fig.1a, 1b où les éléments sensibles sont intervertis ;
- la Fig.3 montre un deuxième mode de réalisation où les deux éléments sensibles de la paire sont au contact respectivement des deux coupelles d'un même boîtier, l'un contre une face extérieure, l'autre contre une face intérieure ;
- la Fig.4 montre une variante du mode de montage de la Fig.3 où les deux éléments sensibles d'une même paire sont au contact respectivement des deux coupelles d'un même boîtier, tous les deux à l'extérieur du boîtier (ou tous les deux à l'intérieur éventuellement) ;
- la Fig.5 montre un deuxième mode de réalisation comportant deux paires d'éléments sensibles, permettant d'augmenter la sensibilité de l'hydrophone ;
- la Fig.6 montre une variante du mode de montage de la Fig.5 où la disposition des éléments sensibles d'une des paires relativement à l'un des diaphragmes est inversée par rapport à la disposition de l'autre paire par rapport à l'autre diaphragme ; et
- la Fig. 7 montre des courbes comparatives de la variation de la distorsion en fonction de la pression acoustique obtenues avec un hydrophone de type connu et avec l'hydrophone selon l'invention.

### DESCRIPTION DETAILLEE

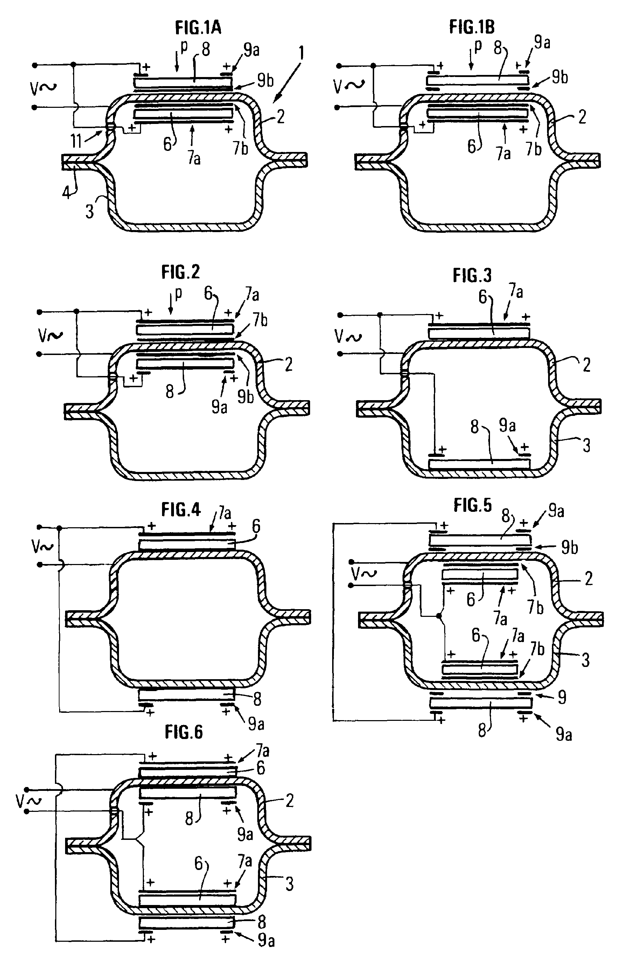

L'hydrophone comporte un boîtier 1 (Fig.1-6) constitué par exemple de deux coupelles identiques 2, 3 disposées symétriquement, avec chacune une plaque ou diaphragme 4 et un rebord recourbé 5, les deux coupelles étant en appui l'une contre l'autre à leur périphérie. Les deux coupelles peuvent être usinées ou bien réalisées par emboutissage.

Contre la face interne de la partie centrale plus flexible du diaphragme 4 de la coupelle 2 par exemple, est fixé (Fig.1a) un élément sensible 6 tel qu'un disque en céramique piézo-électrique associé à deux électrodes 7a, 7b. Un autre élément sensible 8 en forme de disque est fixé à la face externe du diaphragme 4 de la même coupelle 2. Il est associé pareillement à des électrodes 9a, 9b. L'électrode 9b recouvre toute la face au contact de la coupelle 2. L'électrode 9a recouvre seulement une ou plusieurs portions extérieures de la face opposée. Elle est de forme annulaire par exemple. La partie centrale du disque 8 (du côté opposé à la coupelle 2) est donc dépourvue d'électrodes et ne participe pas à la formation de la tension électrique en réponse à des contraintes qui peuvent lui être appliquées. Ces électrodes partielles sont formées par exemple par masquage de la partie centrale des faces du disque 8 et métallisation des portions extérieures découvertes.

Le signe + sur les figures indique le sens (purement indicatif et non limitatif) de polarisation des céramiques piézo-électriques utilisées dans tous les modes de réalisation décrits.

Suivant un mode de mise en oeuvre, on peut aussi métalliser les deux faces de chaque disque, les portions extérieures formant seules l'électrode 9a et participant à la formation de la tension électrique, étant alors alors simplement séparées (isolées électriquement) de la partie centrale.

Suivant la variante de la Fig.1b, les deux électrodes sont symétriquement disposées. L'électrode 9b est également partielle et recouvre seulement des portions de surface comme l'électrode opposée 9a, éventuellement les mêmes.

Un conducteur électrique 10 associé à l'électrode 7a de l'élément sensible intérieur 8, traverse la paroi du boîtier 1 par une traversée étanche telle qu'une perle de verre 11 par exemple. Il est connecté électriquement avec un conducteur 12 associé à l'électrode 9a de l'élément sensible 8. Les électrodes opposées 7b, 9b de ces mêmes éléments sensibles sont en contact électrique avec les coupelles 2, 3 et avec un autre conducteur 13 soudé au boîtier 1. Dans le cas où le boîtier est réalisé en un matériau isolant, l'interconnexion électrique des électrodes 7b et 9b est bien sûr assurée directement par des fils électriques distincts.

Les deux éléments sensibles 6, 8 sont positionnés contre les coupelles 2, 3 en fonction de leur polarisation de façon que leurs faces non en contact avec le diaphragme 4, développent des tensions électriques opposées en réponse à une flexion de celui-ci provoquée lors de l'application d'une pression P sur l'hydrophone.

Les électrodes 7a, 7b recouvrant la totalité des deux faces opposées de l'élément sensible 6, recueillent toute la contribution de la partie centrale soumises à des contraintes relativement linéaires. La partie active métallisée de l'élément sensible 8 de chaque paire, est au contact d'une zone plus proche du bord plus rigide de chaque coupelle 2, 3 soumise plus que la zone centrale à des contraintes non linéaires. Elle génère de ce fait une tension électrique présentant une plus grande distorsion. L'amplitude du signal qu'elle génère est généralement plus faible (du fait que son aire est par exemple moins grande que celle de l'élément central 6). Cependant, on peut observer que les amplitudes des harmoniques de ces deux signaux (notamment l'harmonique d'ordre 2) peuvent être sensiblement les mêmes si l'on optimise les aires actives des deux éléments sensibles, les unes par rapport aux autres. Comme les signaux se retranchent du fait du mode d'interconnexion des électrodes, le signal résultant est plus faible que celui que produirait seul le premier élément sensible central 6 mais il est presque totalement exempt de toute fréquence harmonique.

Suivant la variante de la Fig.2, les deux disques piézo-électriques sont intervertis. L'élément sensible 6 est au contact de la face extérieure de la coupelle 2, alors que l'élément sensible 8 pourvu d'au moins une électrode 9a recouvrant partiellement une de ses faces, est fixé au même diaphragme mais à l'intérieur du boîtier 1, les polarisations des éléments sensibles 6, 8 et les interconnexions d'électrodes précédentes étant conservées.

Suivant le mode de réalisation des Fig.3 et 4, les deux éléments sensibles sont associés respectivement aux deux coupelles 2, 3 de l'hydrophone. Dans le mode de la Fig.3, l'un des éléments sensibles, 6 par exemple (respectivement 8) est disposé au contact de la face extérieure de l'une des coupelles 2, l'autre élément sensible, 8 par exemple (respectivement 6), étant disposé au contact de la paroi intérieure de l'autre coupelle 3, alors que dans le mode de la Fig.4, ils sont tous les deux extérieurs au boîtier de l'hydrophone.

Suivant le mode de réalisation des Fig. 5, 6, l'hydrophone comporte deux paires d'éléments sensibles 6, 8, ces deux paires étant fixées respectivement contre les deux diaphragmes 4 des coupelles 2, 3, avec un élément sensible, 6 par exemple, de chaque paire (respectivement 8) fixé à l'intérieur, et un élément sensible, 8 par exemple, (respectivement 6), fixé à l'extérieur, suivant l'une ou l'autre des dispositions schématisées aux Fig.1a, 1b et 2.

De la même façon, on connecte en parallèle les électrodes 7a, 7b, 9a, 9b des deux paires d'éléments sensibles, de façon à supprimer la distorsion comme précédemment.

Dans tous les cas, on optimise la largeur de chaque électrode partielle, pour chaque élément sensible 8, pour obtenir l'effet de compensation recherché de la distorsion.

Dans tous les modes de réalisation précédents, on peut utiliser des éléments sensibles 6, 8 identiques ne différant que par leurs électrodes, totales pour les uns, partielles pour les autres. Il est possible cependant d'utiliser des disques piézo-électriques de tailles différentes. Le disque 8 avec des électrodes partielles 9 est par exemple plus grand, de façon qu'une portion plus importante de sa surface soit au contact de zones périphériques soumises à de plus fortes contraintes non linéaires, de façon à renforcer la distorsion dans le signal qu'il produit en réponse aux pressions exercées et améliorer la compensation de la distorsion dans le signal résultant.

On ne sortirait pas non plus du cadre de l'invention :
- en changeant la forme des diaphragmes ainsi que celles des éléments sensibles associés,
- en changeant l'emplacement des éléments sensibles sur les faces du ou de chaque diaphragme (disposition symétrique ou dissymétrique par exemple), ou
- en adoptant une autre forme pour les électrodes (9a, 9b) déposées avantageusement par une métallisation sélective sur les éléments sensibles de compensation 8 de chaque paire,
du moment que les agencements retenus permettent, comme décrit ci-dessus, de combiner les tensions qu'ils engendrent avec compensation des distorsions.

Dans les modes de réalisation qui ont été décrits, on a utilisé des éléments sensibles piézo-électriques dont la polarisation et les aires métallisées sont telles que l'on peut interconnecter directement leurs électrodes pour réduire la distorsion. Si cette condition n'est pas remplie, il est cependant possible d'obtenir la compensation recherchée en connectant les électrodes des éléments sensibles 6, 8 de chaque paire, par l'intermédiaire d'un élément d'adaptation tel qu'un circuit électronique (non représenté).

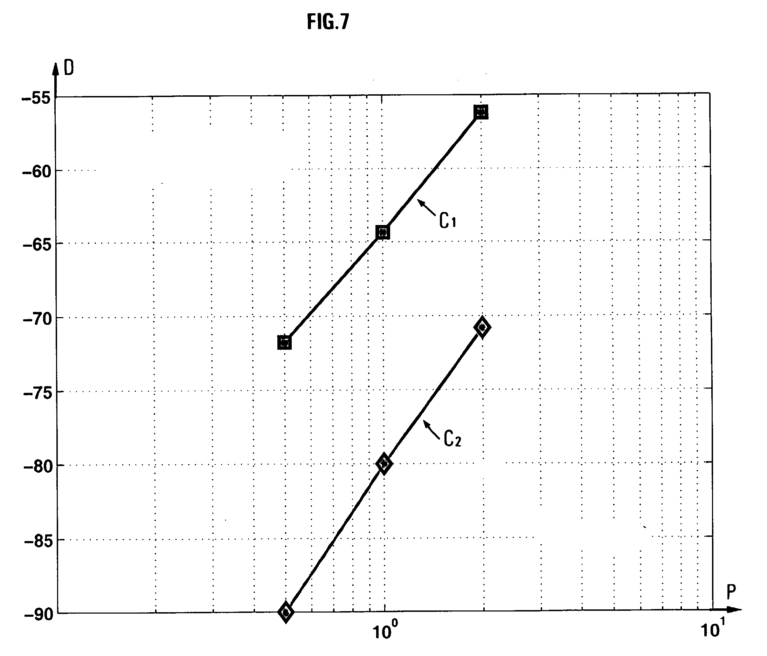

Les courbes comparatives C1, C2 de la Fig.7 montrent les variations de la distorsion résiduelle D en fonction de la pression acoustique pour deux hydrophones. La première, C1, est celle obtenue avec un hydrophone avec une structure de type connu comprenant deux éléments sensibles piézo-électriques identiques métallisés sur leurs deux faces opposées et au contact des faces extérieures d'un boîtier. L'autre, C2, qui est celle obtenue avec l'hydrophone selon l'invention, traduit clairement un recul significatif de la distorsion.

On a décrit des modes de réalisation d'un hydrophone où les éléments sensibles utilisés étaient de type piézo-électrique. Il est bien évident que ceci n'est pas limitatif.

On ne sortirait pas non plus du cadre de l'invention en utilisant tout autre type d'élément transducteur capable de traduire les déformations ou contraintes au contact d'une portion de surface de diaphragme, par exemple des éléments transducteurs à fibre optique sélectivement placés au contact des diaphragmes ou de portions des diaphragmes

## Revendications

1. Hydrophone comportant un boîtier (1) comprenant au moins un diaphragme et au moins une paire d'éléments sensibles au contact du boîtier, générant des signaux traduisant les contraintes générées dans au moins un diaphragme du boîtier, en réponse à des variations de pression dans le milieu extérieur, caractérisé en ce que le premier élément sensible (6) de chaque paire est disposé au contact d'une première portion de diaphragme subissant essentiellement des déformations linéaires, et en ce que le deuxième élément sensible (8) de chaque paire est disposé au contact d'au moins une deuxième portion de diaphragme subissant essentiellement des déformations moins linéaires, les aires respectives des dites première et deuxième portions étant choisies et les signaux produits par les deux éléments sensibles (6, 8) de chaque paire étant combinés de façon à compenser sensiblement la distorsion affectant les signaux résultants produits en opération par l'hydrophone.

2. Hydrophone selon la revendication 1, caractérisé en ce que les éléments sensibles sont de type piézo-électrique.

3. Hydrophone selon la revendication 2, caractérisé en ce que les éléments sensibles (6, 8) de chaque paire sont de type piézo-électrique avec chacun deux faces opposées et des électrodes associées à ces faces opposées, au moins une première électrode (9a) du deuxième élément sensible (8) de la paire, recouvrant seulement une portion de la face du dit élément contre laquelle elle est appliquée.

4. Hydrophone selon la revendication 3, caractérisé en ce que la deuxième électrode (9b) du dit deuxième élément sensible (8) recouvre sensiblement toute la face contre laquelle elle est appliquée.

5. Hydrophone selon la revendication 4, caractérisé en ce que la première et la deuxième électrode (9a, 9b) du dit deuxième élément sensible (8), recouvrent chacune seulement une portion extérieure des faces respectives du dit élément contre lesquelles elles sont appliquées.

6. Hydrophone selon l'une des revendications précédentes, caractérisé en ce que le boîtier (1) comporte un diaphragme flexible (5), les deux éléments sensibles (6, 8) de la même paire étant fixés respectivement aux faces opposées du diaphragme (4).

7. Hydrophone selon l'une des revendications précédentes, caractérisé en ce que le boîtier (1) comporte deux diaphragmes flexibles (5), les deux éléments sensibles (6, 8) de la même paire étant fixés respectivement sur des faces correspondantes des deux diaphragmes flexibles.

8. Hydrophone selon l'une des revendications précédentes, caractérisé en ce que le boîtier (1) comporte deux diaphragmes flexibles, les deux éléments sensibles (6, 8) de la même paire étant fixés respectivement sur des faces différentes des deux diaphragmes flexibles (5).

9. Hydrophone selon la revendication 8, caractérisé en ce qu'il comporte deux paires d'éléments sensibles (6, 8) fixés respectivement aux deux diaphragmes flexibles (5).

10. Hydrophone selon la revendication 9, caractérisé en ce que les éléments sensibles correspondants des deux paires d'éléments sensibles (6, 8) sont au contact respectivement des faces identiques des deux diaphragmes (4).

11. Hydrophone selon la revendication 9, caractérisé en ce que les éléments sensibles correspondants des deux paires d'éléments sensibles (6, 8) sont au contact respectivement des faces opposées des deux diaphragmes (4).

12. Hydrophone selon la revendication 1, caractérisé en ce que les deux éléments sensibles (6, 8) d'au moins une paire d'éléments sensibles sont de taille différentes.

13. Hydrophone selon l'une des revendications 2 à 11, caractérisé en ce que les deux éléments sensibles (6, 8) d'au moins une paire d'éléments sensibles sont de taille différentes, au moins une des électrodes (9a) associées à l'élément sensible le plus grand (8) recouvrant seulement une portion extérieure de la face correspondante.

14. Hydrophone selon l'une des revendications 2 à 12, caractérisé en ce que les dites portions de chaque dite première électrode (9a, 9b) et les électrodes (7a, 7b) de l'autre élément sensible (6) sont dimensionnées de façon à compenser la distorsion.

15. Hydrophone selon l'une des revendications précédentes, caractérisé en ce que le boîtier (1) comporte au moins un diaphragme flexible circulaire (5), les éléments sensibles de chaque paire étant constitués de disques rendus sensibles l'un (6) sur une portion centrale, l'autre (8), sur une partie périphérique.

16. Hydrophone selon l'une des revendications 1, 6-8, 12 ou 15, caractérisé en ce que les éléments sensibles (6, 8) de chaque paire sont de type à fibre optique.

17. Hydrophone selon l'une des revendications précédentes, caractérisé en ce que les éléments sensibles (6, 8) de chaque paire, sont directement interconnectés.

18. Hydrophone selon l'une des revendications précédentes, caractérisé en ce que les éléments sensibles (6, 8) de chaque paire, sont connectés par l'intermédiaire d'un élément d'adaptation.

19. Hydrophone selon l'une des revendications précédentes, caractérisé en ce que le boîtier (1) comporte au moins une coupelle (2, 3) dont la partie centrale est flexible et la partie extérieure est plus rigide, le premier élément sensible (6) de chaque paire étant disposé de façon à générer des signaux traduisant les déformations essentiellement linéaires affectant une portion centrale flexible de coupelle, et en ce que le deuxième élément sensible (8) de chaque paire est disposé de façon à générer des signaux traduisant les déformations essentiellement moins linéaires affectant une portion extérieure plus rigide de coupelle.
